# EUROPEAN PATENT SPECIFICATION

(11) **EP 4 172 267 B1**
(45) Date of publication and mention of the grant of the patent: **09.04.2025**
(21) Application number: 21732920.0
(22) Date of filing: 18.06.2021
(51) Int. Cl.: C08L 67/02, E01C 13/08, C08K 3/26, C08K 3/34, C08K 5/00, C08K 9/04, B29B 9/12

(54) **BIODEGRADABLE AND COMPOSTABLE COMPOSITION FOR USE AS BIO-INFILL ON ARTIFICIAL TURF FIELDS**
BIOLOGISCH ABBAUBARE UND KOMPOSTIERBARE ZUSAMMENSETZUNG ZUR VERWENDUNG ALS BIO-AUFFÜLLUNG AUF KUNSTRASENFELDERN
COMPOSITION BIODÉGRADABLE ET COMPOSTABLE À UTILISER EN TANT QUE BIO-REMPLISSAGE SUR DES CHAMPS DE GAZON ARTIFICIEL

(30) Priority: 26.06.2020 EP 20182469
(43) Date of publication of application: 03.05.2023
(73) Proprietor: Gaia Holding AB, 253 68 Helsingborg (SE)
(72) Inventor: ROSÉN, Åke, 254 54 HELSINGBORG (SE)
(74) Representative: AWA Sweden AB
(86) International application number: PCT/EP2021/066587
(87) International publication number: WO 2021/259778

(56) References cited:
- WO-A1-2018/208150
- US-B2- 9 056 979

## Description

### Technical field of the invention

The present invention relates to a biodegradable and compostable composition having a unique composition especially suited as a bio-infill on artificial turf fields. The composition having different components is fully biodegradable and fully compostable after decomposition. The present invention further relates to a granule comprising said composition and to the use of the biodegradable and compostable composition or granule as a bio-infill on artificial turf fields.

### Technical Background

The use of fossil based plastic materials has during late time been more and more questioned, especially when used in disposable articles, hygiene products and as infills on artificial turf fields. Residues from infills on artificial turf fields have been found in water and ground in the environment surrounding for instance football fields or playgrounds or such areas. Residues such as microplastics have gained increased interest from public and governments, since they have been found to induce harmful effects in humans and animals.

When for instance a football field is equipped with artificial turf, the synthetic grass needs an infill material to make sure the grass can be held upright and that it does not lose its function and rigidity during use. Today, the infill commonly used is made from rubber coming from old rubber tires or from cork.

Cork is made from bark tissue of the cork tree. It is an environmentally friendly and recyclable material. However, its low density makes it very light which affects its ability to stay in place during for instance heavy rain. This forces a high maintenance of artificial turf fields with cork as infill.

The raw material for rubber tires is a mixture of natural rubber and synthetic rubber. The synthetic rubber is mainly composed of butadiene and styrene butadiene. The origin of those are from crude oil. This raw material is not renewable, it is not degradable and during combustion it releases methane gas.

Moreover, rubber has in some cases shown to compose substances toxic to human or nature, making them not suitable for use at places where they are exposed to humans. As a use in artificial turf fields it is especially unsuited since for instance football players or children playing at playgrounds will be exposed to the rubber particles on a regular basis with unknown health effects.

Even further, use of plastics and rubber in many products has led to the release of small components, called micro plastics, into the ground and water. Micro plastics have been found all over the globe and it is today not known what environmental effects the large distribution can have. Since the infill is used at the ground, not seldom close to systems for water draining the infills are often found in the surroundings of the fields.

From both governments and public there is a large demand for better material to use instead of rubber or plastic. Cork being one of them, however with the drawback of requiring high maintenance due to its low density.

The new material to be used must be made to a large extent of renewable sources, be biodegradable and compostable. Further, it must be ensured to not give rise to toxic microplastics. Yet, the new material must withstand different weather conditions when used outside as an infill on artificial grass fields. One such material commonly used for replacing other plastic or rubber materials in several different applications is polylactic acid (PLA) produced from starch.

However, this material comes with some drawbacks some of them being that the temperature for decomposition is 70 °C, but the softening temperature is 50 °C. This gives drawbacks during decomposition, since a high temperature is needed to initiate the process, while at the same time the products softens at 50 °C which restrains the product from being used in environments with temperatures above 50 °C. For instance, at football fields, it is not uncommon to reach this temperature during a hot summer day making PLA unsuited for this purpose since its effect is only possible when it has a rigid structure. If the product is softened by the temperature during use, the risk for injuries are increased.

KR102081626 discloses an environmentally friendly filling material for artificial turf for adjusting humidity. The artificial turf filler composition is manufactured to include an inorganic filler such as diatomite in a substrate consisting of recycled ethylene propylene diene monomer, poly propylene and poly lactic acid.

KR101363360 discloses an eco-friendly functional filler for artificial turf formed by extruding and injecting a mixture of 40 to 60 wt percent of a biodegradable polymer, 20 to 30 wt percent of red clay powder which is a mineral filler, 15 to 30 percent of crushed straws, and 0.01 to 5 percent of stabilizer which is addition agent. The biodegradable polymer is formed by blending at least one of a natural polymer having starch, chitin, or cellulous, synthetic polymers having polycaprolactone, polylactic acid, aliphatic polyester, or polyglycolic acid, and microbial polymers having polyhydroxyalkanoates or poly-3-hydroxy-butyrate.

US 9 056 979 discloses a biodegradable polyester mixture comprising polyester I and polyester II**,** calcium carbonate and talc.

WO2018/208150 discloses artificial turf suitable for sports fields comprising a granular infill made of a biobased and/or biodegradable foam material like polylactic acid.

Thus, there is a need for developing new materials for substituting e.g. plastics or rubber in areas such as infills on artificial turf fields, as used for exercising different sports such as soccer, or on playgrounds.

### Summary of the invention

One object of the present invention is to provide a composition suitable for replacing e.g. cork and rubber infill in artificial turf fields, which composition is made from renewable resources, which is biodegradable, compostable, and which does not leave micro plastics.

One object of the present invention is to provide a composition suitable for replacing e.g. cork and rubber in infill on artificial turf fields which requires lower maintenance.

Yet another object of the present invention is to provide granules from said composition.

Yet another object of the present invention is to provide a use of granules made from the composition as bio-infill on artificial turf fields.

The present invention concerns a composition suitable for replacing cork and rubber as bio-infill on artificial turf fields, which composition is biodegradable, compostable, and does not leave micro plastics. According to the invention, the composition comprises: (i) 30-60 % by weight of at least one biodegradable and/or decayable aromatic polyester; (ii) 10-30 % by weight of calcium carbonate particles having a polished surface; (iii) 1-5 % by weight of at least one oil of vegetable origin; (iv) 10-20 % by weight of an additive chosen from hydrated magnesium silicate; (v) 0-40 % by weight of at least one aliphatic polyester; (vi) 0.5-1 % by weight of at least one UV-stabilizer, wherein said aliphatic polyester is not polylactic acid.

The composition being prepared as granules, suitable for use as a bio-infill of artificial turf fields.

The present invention also concerns a granule comprising the composition as disclosed in this application.

The present invention further concerns use of a composition as disclosed in this application or a granule as described herein as a bio-infill on artificial turf fields.

Hereby an improved composition suitable for replacing cork or rubber or any other material used in an artificial turf field is provided, which is feasible for use as bio-infill on artificial turf fields, without leaving microplastics, and which is biodegradable and compostable.

In one embodiment of the present invention, the calcium carbonate is dolomite particles or a mixture of calcium carbonate and dolomite particles. Calcium carbonate and/or dolomite is constantly renewed in the ground, provided from minerals. During decaying, it will again return to the soil and act as a soil improvement agent. The use of calcium carbonate and/or dolomite particles in the composition will further increase the density of the granules produced by the composition. The increased density prevents the granules from flooding away from the field, thereby decreases the need for maintenance as compared to other materials commonly used.

The use of at least one UV-stabilizer in the composition will increase the lifetime of the bio-infill when used outside on artificial turf fields. The UV-stabilizer will ensure that the bio-infill material can be used for at least one season without starting to decompose.

In one embodiment of the present invention, the calcium carbonate particles may be dolomite particles or a mixture of calcium carbonate and dolomite particles.

In one embodiment of the present invention, the calcium carbonate and/or dolomite particles may be pre-treated with said at least one oil of vegetable origin. The pre-treatment of calcium carbonate and/or dolomite particles having a polished surface, with at least one oil of vegetable origin will lead to that the calcium carbonate and/or dolomite particles act as a lubricant. The lubricant function is further improved by an additive chosen from hydrated magnesium silicate, leading to decrease of the tear of the machines used.

In one embodiment of the present invention the calcium carbonate and/or dolomite particles may have a particle size of about 2-4 µm.

In one embodiment of the present invention the hydrated magnesium silicate is talcum powder.

The hydrated magnesium silicate will act to decrease the friction of the final composition or the granules comprising the composition as described herein when the final composition or the granules are used as bio-infill on artificial turf field. This will decrease the risk of injuries of athletes using the artificial field.

In one embodiment of the present invention, the at least one aliphatic polyester may be a biodegradable aliphatic polyester.

In accordance with the present invention, the at least one aliphatic polyester is not PLA. Thus, in accordance with the present invention the composition may not comprise PLA.

In one embodiment of the present invention, at least one slip agent may be included in the composition in an amount of 0-3 % by weight and may be a vegetable fatty acid or a mixture of fatty acids or an oil containing fatty acids. For instance, olive oil or any other vegetable oil is an example of a mixture of different fatty acids which may be used as a slip agent. Olive oil is composed mainly of the mixed triglyceride esters of linoleic acid, palmitic acid and of other fatty acids. The use of at least one slip agent in the composition may provide the bio-infill with an outer smooth surface. The slip agent, which is a vegetable fatty acid or a mixture of fatty acids or an oil containing fatty acids, is in addition to the added at least one oil of vegetable origin in amount of 1-5 % by weight.

The calcium carbonate and/or dolomite particles according to the present invention has preferably a polished surface, such that substantially no sharp edges remain on the surface of the particles. Removing substantially all the sharp edges of the particles will decrease the risk of injuries if falling on a field where the composition is used as a bio-infill for artificial turf. Pre-treating the particles to saturation with at least one oil of vegetable origin will lead to that the calcium carbonate and/or dolomite particles will act as a lubricant which will limit the apparatus wear during processing thereof.

The at least one oil of vegetable origin is used to improve the manufacture of the composition into for instance granules. The at least one oil of vegetable origin is used as a pre-treatment to the calcium carbonate and/or dolomite particles, making them act as a lubricant in the composition. Thereby decreasing the tear of the machines used to manufacture for instance granules comprising the composition as defined herein. The at least one oil of vegetable origin will be absorbed within the composition during manufacture. The absorption of the oil will prevent and block absorption of other components such as water.

Decomposition of a composition according to the present invention may be initiated at 30-35 °C if it is present under compostable conditions with bacteria present. The decomposition may be completed within two months when nothing more than earth remains. As compared to rubber which is not decomposable or as compared to compositions containing PLA where the decomposition requires 70 °C to be initiated, which makes higher demand on the facilities handling the decomposition. By addition of UV-stabilizer in the composition, it is ensured that the decomposition will not be initiated when the composition or granules comprising the composition is used on an outdoor field. This ensures that the granules of the invention can be used for one entire season of football without starting to decompose. However, if the granules of the invention ends up outside of the field it will be fully decomposed after some time without leaving toxic residues such as microplastics in the ground.

Further, when granules comprising the composition according to the present invention is used as bio-infill on artificial turf fields, the composition does not release micro plastics into the environment and it does not compose of substances toxic to humans and the nature. By using the composition of the present invention, the carbon dioxide (CO₂) emission is reduced up to 80%. From a life cycle analysis, it has been concluded that for each 6 tons of fossil plastics which is replaced by a material of the invention 6.6 tons of carbon dioxide emission can be saved. This is in line with goals to reduce global warming.

The invention also concerns a granule comprising the composition as described herein.

In one embodiment, the granules may have a particle size of 1.5-2 mm.

In one embodiment of the present invention the granules has a density of approximately 1.20-1.50 g/cm3, such as 1.35 g/cm³, thus 1350 kg/m³.

The invention also concerns use of a composition comprising the components as described herein or the granules as described herein as a bio-infill on artificial turf fields as used during winter time when exercising different sports such as soccer. The density of the bio-infill is approximately 1.35 g/cm³. This density provides with a bio-infill being heavy enough to not easily be affected by windy conditions or rain, but it still has great properties for the users, Thus, use of a composition comprising the components will reduce the maintenance of the field while still not negatively affect the properties for the users. When establishing a new field, it requires 100 tons of infill material. For each maintenance a volume of 5-10 tons is required. Being able to reduce the maintenance needed is good for both economics reasons and for the environment. A composition comprising the components as described herein was tested for use as a bio-infill on artificial turf fields and performed better for maintenance than the commonly used material due to the higher density. However, if the composition ends up in the environment around the fields where it is used it will decompose without leaving any toxic residues. For instance, the granules comprising the composition of the invention may end up in snow packs when snow has been removed from turf fields after snowy weather. After melting, the granules may end up in nature or drain pipes and the granules will decompose after some time without leaving any toxic micro plastics. The decomposition in nature is possible due to the unique composition, which do not need industrial temperatures for decomposing.

### Definitions

The term "dolomite" means the mineral CaMg(CO₃)₂ or a commercially available product which is won from a natural occurring dolomite deposit or which is sold as "dolomite".

Talc is a clay mineral composed of hydrated magnesium silicate with the chemical formula Mg₃Si₄O₁₀(OH)₂.

The term "biodegradable" means material which decomposes substantially fully, and which does not discharge contaminants during incineration or leave plastic fragments after decomposition.

The term "particle size" means, for a non-spherical particle, the diameter of a corresponding spherical particle which apart from material is identical with the non-spherical particle regarding volume, weight or area.

The terms in the claims should have their general meaning within the technical area; unless any other definition has been given above. All referral to "a" or "the" "[composition, layer, container, film]" should be read as a referral to at least one of said composition, layer, container, film, etc. unless something else is specified.

### Detailed Description of the invention

The present invention concerns a composition suitable for replacing e.g. rubber or cork within the field of bio-infills on artificial turf fields which is biodegradable, compostable, and which does not leave micro plastics in the ground or water during or after use.

The biodegradable and compostable composition suitable for replacing rubber or cork within the field of bio-infills on artificial turf fields according to the present invention thus comprises
(i) 30-60 % by weight of at least one biodegradable and/or decayable aromatic polyester;
(ii) 10-30 % by weight of calcium carbonate particles having a polished surface;
(iii) 1-5 % by weight of at least one oil of vegetable origin;
(iv) 10-20 % by weight of an additive chosen from hydrated magnesium silicate;
(v) 0-40 % by weight of at least one aliphatic polyester;
(vi) 0.5-1 % by weight of at least one UV-stabilizer, wherein said aliphatic polyester is not polylactic acid.

In one embodiment said composition comprises (i) 60 % by weight of at least one biodegradable and/or decayable aromatic polyester; (ii) 15 % by weight of dolomite particles having a polished surface; (iii) 2 % by weight of at least one oil of vegetable origin; (iv) 10 % by weight of an additive chosen from hydrated magnesium silicate; (v) 10 % by weight of at least one aliphatic polyester, which may not be PLA; (vi) 1 % by weight of a UV-stabilizer; (vii) 2 % by weight of a slip agent. The composition being prepared as granules, suitable for use as a bio-infill of artificial turf fields.

In one embodiment said composition comprises (i) 60 % by weight of at least one biodegradable and/or decayable aromatic polyester; (ii) 15 % by weight of dolomite particles having a polished surface; (iii) 2 % by weight of at least one oil of vegetable origin; (iv) 12 % by weight of an additive chosen from hydrated magnesium silicate; (v) 10 % by weight of at least one aliphatic polyester, which may not be PLA; (vi) 1 % by weight of a UV-stabilizer; (vii) 0 % by weight of a slip agent. The composition being prepared as granules, suitable for use as a bio-infill of artificial turf fields. In one embodiment of the present invention the biodegradable and/or decayable. aromatic polyester, may be a polybutylene adipate terephthalate (PBAT), a random copolymer produced from adipic acid, 1,4-butanediol, and terephthalic acid. Any other aromatic polyester with similar properties as PBAT may be used. The at least one biodegradable and/or decayable aromatic polyester is present in an amount of 30-60 % by weight. For instance, 30-35, 35-40, 45-50, 50-55, or 55-60 % by weight. For example, the at least one biodegradable and/or decayable aromatic polyester is present in an amount of 60 % by weight as is disclosed in the experimental part.

In one embodiment of the present invention the calcium carbonate particles may be dolomite particles. Calcium carbonate and dolomite are materials acquired from the soil, where it originates from minerals. Said particles may have a polished surface, where all sharp edges have been removed on the particles, and a surface is produced which is smooth without any sharp corners. The particles constitute 10-30 % by weight. For example, 10-15 %, 15-20 %, 20-25 % or 25-30 % by weight of the composition. In one embodiment the particles constitute 10 % by weight of the composition.

Further, according to one embodiment of the present invention, said particles may have a size of about 2-4 µm.

According to one embodiment of the present invention, said particles may be pre-treated with at least one oil of vegetable origin as to reach saturation. The mix of the particles and the oil lead to that the particles act as a lubricant, which decreases the tear of the machines used.

In one embodiment, the composition according to the invention may include at least one oil of vegetable origin. The oil may be rape seed oil or any vegetable oil with similar characteristics. Suitably, a vegetable oil is used which is available in the vicinity of the manufacturing site of the granules in order to minimize transportation of the oil, leading to less impact on the environment. In northern Europe rape seed oil could be a beneficial choice. In southern Europe olive oil could be a suitable choice. The at least one oil of vegetable origin constitute 1-5 % by weight of the composition. For example, 1-3 % by weight or 3-5 % by weight. The at least one oil of vegetable origin may for example constitute 2 % by weight of the composition.

In one embodiment, the composition according to the invention may include an additive chosen from hydrated magnesium silicate. Talcum powder may be the preferred choice. The use of hydrated magnesium silicate further increases said lubricant effect, decreasing the tear of machines even further. The hydrated magnesium silicate, such as talcum constitute 10-20 % by weight of the composition. For example, 10-15 % or 15-20 % by weight. In one embodiment the hydrated magnesium silicate constitutes 10 %.

In one embodiment, the aliphatic polyester, may be a biodegradable aliphatic polyester. The aliphatic aliphatic polyester may be polybutylene succinate (PBS). Polybutylene succinate being a fossil-free renewable polyester synthesized from 1,4-butane diol and succinic acid. Any other aliphatic polyester having similar properties as polybutylene succinate may be used. PBS is an polyester which is more viscous than PBAT, giving the final composition a longer life time. In accordance with the present invention the aliphatic polyester is not PLA. The at least one aliphatic polyester may constitute 0-40 % by weight of the composition. For example, 0-10 %, 10-20 %, 20-30 %, 30-40 % by weight of the composition, for instance 5, 10, 15, 20, 25, 30, 35 or 30 % by weight of the composition. The composition constitutes for example 10 % by weight of at least one aliphatic polyester as is described in the experimental part.

In one embodiment, the composition according to the present invention may include at least one UV-stabilizer (ultra violet stabilizer). In one embodiment, the at least one UV-stabilizer may be UV-5411. UV-5411 is comprised in the hydroxyphenyl benzotriazole class. It has a molecular formula of C₂₀H₂₅N₃O. Any other UV-stabilizer having similar properties as UV-5411 may be used. The use of a UV-stabilizer pro-longs the durability of the composition when used in an outdoor field under long impact of sun light. Since the composition has such good qualities regarding biodegradability, the use of UV-stabilizer ensures that the granules comprising the composition of the invention may be used for one year before it can be fully decomposed as described below. The UV-stabilizer constitute 0.5-1 % by weight of the composition. The composition constitutes for example 1 % by weight of at least one UV-stabilizer as is described in the experimental part.

In one embodiment, the composition according to the present invention may include at least one slip agent. The slip agent may be a vegetable fatty acid, a mixture of fatty acids or an oil containing fatty acids. In one embodiment, the slip agent may be olive oil. The use of at least one slip agent provides the bio-infill with an outer surface that is slippery. The at least one vegetable fatty acid constitute 0-3 % by weight of the composition. The composition constitutes for example 0 or 2 % by weight of at least one slip agent as is described in the experimental part. The optionally added slip agent is in addition to the added at least one oil of vegetable origin.

In one embodiment, there is provided, a biodegradable and compostable composition comprising:
(i) 30-60 % by weight of at least one biodegradable and/or decayable aromatic polyester;
(ii) 10-30 % by weight of calcium carbonate particles having a polished surface;
(iii) 1-5 % by weight of at least one oil of vegetable origin;
(iv) 10-20 % by weight of an additive chosen from hydrated magnesium silicate;
(v) 0-40 % by weight of at least one aliphatic polyester;
(vi) 0.5-1 % by weight of a UV-stabilizer;
(vii) 1-3 % by weight of at least one slip agent, wherein said aliphatic polyester is not polylactic acid.

In a compost container, the formation of methane gas requires 30-35 °C to start. The methane gas further increases the growth of bacteria, which starts the decaying process. If the granules of the invention would end up in a compost container the decaying process would start around 30-35 , while bioplastic compositions comprising PLA according to prior art require a temperature of 70 °C for the decomposition to start. During decaying process of the granules or compositions according to the present invention, some of the granules or compositions will decay and may give rise to biogas, and the remaining within the digested sludge will be spread out on the fields. Calcium carbonate and/or dolomite will not influence the decaying process but will act as soil improvement agent out on the fields as it will neutralize the pH, which is favorable for soil. The calcium carbonate and/or dolomite will for instance provide the soil with growth factors such as calcium and magnesium and other important minerals.

The problem with the use of plastic material from fossil sources, or from raw material which does not degrade in nature are getting increased attention from governments as well as the public. The use of plastics in products giving rise to micro plastics in soil and water has also gained interest during later years. The composition of the present invention is fully biodegradable and compostable, without being a source of micro plastics. The calcium carbonate and dolomite are neutral components within the composition, as it returns back to the nature in the same form as it is withdrawn from the nature. The oil component as used in the composition come from vegetable origin, which is a renewable raw material, while the aromatic polyesters available on the market as of today mostly is from non-renewable raw material, but also from partly renewable and fully degradable sources, such as PBAT disclosed above. The composition according to the present invention may only comprise 6-30 % of non-renewable raw material.

From the composition according to the present invention granules for use as bio-infill on artificial turf fields are provided. In the use as bio-infill on artificial turf fields, the composition has advantages for this use such that it does not release micro plastics to the surrounding environment, it does not include substances being toxic to nature or humans, and it does not soften even during higher air temperatures.

The use of at least one oil of vegetable origin to saturate calcium carbonate and/or dolomite particles prevents water from permeabilizing the composition which increases strength and reduces permeability. This increases durability of the granules made from the present invention when used as a bio-infill on artificial turf fields.

Mixing calcium carbonate and/or dolomite particles with at least one oil of vegetable origin until saturation and with an additive chosen from hydrated magnesium silicate such as talcum powder allows the mix to act as a lubricant, reducing the tear of the machines used.

The composition may be used to manufacture granules which may then be used as bio-infill on artificial turf fields or on in-door or out-door sports turf fields or on play grounds for children.

### EXAMPLES

By way of examples, and not limitation, the following examples identify a variety of compositions pursuant to the embodiments of the present invention.

### Experiment 1

In the first experiment dolomite particles, in a concentration of 15 % by weight of the calculated final composition, was polished to acquire smooth edges. Next, the particles were mixed with 2 % by weight of rapeseed oil to saturate the particles. The result of the mixing was a non-sticky mixture working as a lubricant in the further processing steps.

In parallel, 60 % by weight of PBAT was mixed with 10 % by weight of talcum powder, 10% of polybutylene succinate, and 1 % by weight of UV-5411 during heating to 150 °C under a pressure of 225 bar. The mixing was done in an extruder and the lubricant mixture from the first step was added to the extruder.

Using the extruder, the composition was pushed out of the extruder and cut into granules. The granules were treated with 2 % by weight of olive oil as slip agent to acquire a slippery surface. The density of the granules was1.35 g/cm³. The total weight of the composition was 5000 ton.

### Experiment 2

In the second experiment dolomite particles, in a concentration of 15 % by weight of the calculated final composition, was polished to acquire smooth edges. Next, the particles were mixed with 2 % by weight of rapeseed oil to saturate the particles. The result of the mixing was a non-sticky mixture working as a lubricant in the further processing steps.

In parallel, 60 % by weight of PBAT was mixed with 12 % by weight of talcum powder, 10% of polybutylene succinate, and 1 % by weight of UV-5411 during heating to 150 °C under a pressure of 225 bar. The mixing was done in an extruder and the lubricant mixture from the first step was added to the extruder.

Using the extruder, the composition was pushed out of the extruder and cut into granules. The density of the granules was 1.35 g/cm³. The total weight of the composition was 5000 ton. The granules were later used in a test facility for bio-infill on artificial turf fields as described in Experiment 3.

### Experiment 3

Experiment 3 was an experiment to investigate shock absorption deformation, energy restitution, ball rebound, rotational resistance, infill depth, and free pile when the composition is used as a bio-infill on artificial turf fields for football fields. The experiment was performed according to FIFA requirements in a laboratory. The composition was performed in a standardized lab. The results can be found in the Table 1 below.

| | | | | |
|---|---|---|---|---|
| Synthetic Turf: | 40mm stock monofilament | | | |
| Bio-infill | 4 kg/m2 | | | |
| Sand | 18 kg/m2 | | | |
| Shockpad | Schmitz ProPlay 20 (New version) Prefabricated PE foam 20mm | | | |

| Parameter | Mean Result | | FIFA Quality Requirement | FIFA Quality Pro Requirement |
|---|---|---|---|---|
| | DRY | WET | | |
| Shock Absorption | 65.5 % | 65.8 % | 57 - 68 % | 62 - 68 % |
| Deformation | 9.4 mm | 9.4 mm | 6 - 11 mm | 6 - 10 mm |
| Energy Restitution | 36.4 % | 35.4 % | - | - |
| Rotational Resistance | 31 Nm* | 31 Nm* | 27 - 48 Nm | 32 - 43 Nm |
| Ball Rebound | 0.77 m | 0.78 m | 0.6 - 1.0 mm | 0.6 - 0.85 m |

The bio-infill according to Experiment 2 was used in an amount of 4 kg/m2. The experiment was performed under both dry and wet conditions and it passed the tests according to the FIFA quality requirements as well as the FIFA quality pro requirements in relation to shock absorption, deformation, energy restitutions, rotational resistance and ball rebound. Thus, according to the present invention there has been provided a biodegradable and compostable composition and granules comprising said composition which will have a positive impact on the environment. The invention is an environmentally friendly alternative to existing bio-infills on artificial turf field which are used today for sports activities such as soccer or football. The invention as defined herein is beneficial for the environment and a more health alternative for humans and animals on the turf fields or playgrounds.

### Experiment 4

### Heat deflection temperature test

The heat deflection temperature (HDT) according to a standard test method, ASTM D648, was performed with regard to granules as obtained in Example 2 in order to determine at what temperature the granule material deforms. This is important in order to determine whether the granule material can handle the temperatures as found on e.g. turf fields. The procedure was according to a standard test method, ASTM D648. It was shown that the material according to the invention could handle up to approximately 90°C. This is a great improvement in comparison with a material containing for instance PLA which is known to have a heat deflection temperature of about 50°C. A heat deflection temperature of about 50°C is not efficient for the purpose of the present invention and will lead to a change of the properties of the material at too low temperatures. Thus, the material according to the invention has advantages compared to prior art materials for the purpose of bio-infill for artificial turf fields since it can handle higher temperatures.

## Claims

1. Biodegradable and compostable composition comprising:
(i) 30-60 % by weight of at least one biodegradable and/or decayable aromatic polyester;
(ii) 10-30 % by weight of calcium carbonate particles having a polished surface;
(iii)1-5 % by weight of at least one oil of vegetable origin;
(iv)10-20 % by weight of an additive chosen from hydrated magnesium silicate;
(v) 0-40 % by weight of at least one aliphatic polyester;
(vi) 0.5-1 % by weight of a UV-stabilizer
wherein said aliphatic polyester is not polylactic acid.

2. A composition according to claim 1, wherein said calcium carbonate particles are dolomite particles (CaMg(CO₃)₂) or a mixture thereof.

3. A composition according to any one of claims 1 - 2, wherein said calcium carbonate or dolomite particles have a particle size of 2-4 µm.

4. A composition according to any one of claims 1-3, wherein said aliphatic polyester is a biodegradable aliphatic polyester.

5. A composition according to any one of the claims 1-4, wherein said hydrated magnesium silicate is talcum powder.

6. A granule comprising the composition as defined in any one of the claims 1-5.

7. A granule according to claim 6, wherein the granule has a particle size of 1.5-2 mm.

8. A granule according to claim 7, wherein the granule has a density of 1.20-1.50 g/cm³.

9. Use of a composition according to any one of claims 1-5 or a granule as defined in any one of claims 6 to 8 as a bio-infill on artificial turf field or playground.

## Patentansprüche

1. Biologisch abbaubare und kompostierbare Zusammensetzung, die Folgendes umfasst:
(i) 30-60 Gew.-% mindestens eines biologisch abbaubaren und/oder verrottbaren aromatischen Polyesters;
(ii) 10-30 Gew.-% Calciumcarbonatpartikel mit polierter Oberfläche;
(iii) 1-5 Gew.-% mindestens eines Öls pflanzlichen Ursprungs;
(iv) 10-20 Gew.-% eines Zusatzstoffs, ausgewählt aus hydratisiertem Magnesiumsilikat;
(v) 0-40 Gew.-% mindestens eines aliphatischen Polyesters;
(vi) 0,5-1 Gew.-% eines UV-Stabilisators
wobei der aliphatische Polyester keine Polymilchsäure ist.

2. Zusammensetzung nach Anspruch 1, wobei die Calciumcarbonatpartikel Dolomitpartikel (CaMg(CO₃)₂) oder ein Gemisch davon sind.

3. Zusammensetzung nach einem der Ansprüche 1 - 2, wobei die Calciumcarbonat- oder Dolomitpartikel eine Partikelgröße von 2-4 µm aufweisen.

4. Zusammensetzung nach einem der Ansprüche 1 - 3, wobei der aliphatische Polyester ein biologisch abbaubarer aliphatischer Polyester ist.

5. Zusammensetzung nach einem der Ansprüche 1 - 4, wobei das hydratisierte Magnesiumsilikat Talkumpuder ist.

6. Granulat, das die Zusammensetzung umfasst, wie in einem der Ansprüche 1 - 5 definiert.

7. Granulat nach Anspruch 6, wobei das Granulat eine Partikelgröße von 1,5-2 mm aufweist.

8. Granulat nach Anspruch 7, wobei das Granulat eine Dichte von 1,20-1,50 g/cm³ aufweist.

9. Verwendung einer Zusammensetzung nach einem der Ansprüche 1 - 5 oder eines Granulats wie in einem der Ansprüche 6 - 8 definiert, als Bio-Füllmaterial auf Kunstrasenplätzen oder Spielplätzen.

## Revendications

1. Composition biodégradable et compostable comprenant :
(i) de 30 à 60 % en poids d'au moins un polyester aromatique biodégradable et/ou décomposable ;
(ii) de 10 à 30 % en poids de particules de carbonate de calcium ayant une surface polie ;
(iii) de 1 à 5 % en poids d'au moins une huile d'origine végétale ;
(iv) de 10 à 20 % en poids d'un additif choisi parmi le silicate de magnésium hydraté ;
(v) de 0 à 40 % en poids d'au moins un polyester aliphatique ;
(vi) de 0,5 à 1 % en poids d'un stabilisateur UV
dans laquelle ledit polyester aliphatique n'est pas l'acide polylactique.

2. Composition selon la revendication 1, dans laquelle lesdites particules de carbonate de calcium sont des particules de dolomite (CaMg(CO)₃)₂) ou un mélange de celles-ci.

3. Composition selon l'une quelconque des revendications 1 à 2, dans laquelle lesdites particules de carbonate de calcium ou de dolomite ont une taille de particule de 2 à 4 µm.

4. Composition selon l'une quelconque des revendications 1 à 3, dans laquelle ledit polyester aliphatique est un polyester aliphatique biodégradable.

5. Composition selon l'une quelconque des revendications 1 à 4, dans laquelle ledit silicate de magnésium hydraté est de la poudre de talc.

6. Granulé comprenant la composition telle que définie dans l'une quelconque des revendications 1 à 5.

7. Granulé selon la revendication 6, dans lequel le granulé a une taille de particule de 1,5 à 2 mm.

8. Granulé selon la revendication 7, dans lequel le granulé a une masse volumique de 1,20 à 1,50 g/cm³.

9. Utilisation d'une composition selon l'une quelconque des revendications 1 à 5 ou d'un granulé tel que défini dans l'une quelconque des revendications 6 à 8 comme matériau de remplissage biologique sur un terrain ou une aire de jeux en gazon artificiel.
